# EUROPEAN PATENT SPECIFICATION

(11) **EP 0 243 671 B1**
(45) Date of publication and mention of the grant of the patent: **10.08.1994**
(21) Application number: 87104304.8
(22) Date of filing: 24.03.1987
(51) Int. Cl.: G06F 15/40, G06F 3/033

(54) **Menu management system**
Menu-Verwaltungssystem
Système de gestion de menu

(30) Priority: 27.03.1986 US 844909
(43) Date of publication of application: 04.11.1987
(73) Proprietor: WANG LABORATORIES INC., Lowell, MA 01851 (US)
(72) Inventor: Brandt, Timothy A., Boxborough, MA 01719 (US)
(74) Representative: Behrens, Dieter, Dr.-Ing.

(56) References cited:
- EP-A- 0 140 302
- GB-A- 2 124 459

## Description

The present invention relates to mechanisms by which users direct the action of computer-based systems.

In efforts to make computer-based systems easier for people to use, various methods of communicating commands to the computer have been developed. With the "command-line" approach, the user types the text of a command. Keys have been added to the keyboard that can be used to issue a command with a single key stroke; the extra keys may be arranged to perform different functions at different times, in which case they are known as programmable function keys (PF keys). Menu-driven systems display lists of commands (also known as menu picks) from which the user can select by moving a cursor to point to the desired menu pick.

Menu systems can be arranged to operate in various ways. For example, the keys can be used in different ways, such as using the arrow keys to move the cursor among the menu picks or using the space and backspace key to move the cursor among the menu picks. If the key usage and display conventions for menus is different when using a computer system for different functions, the user's efficiency will be diminished; in extreme cases, incorrect menu selections may be made.

A menu-driven system may organize its commands in a hierarchy of menus. For example, the top level menu might be used to select among different applications such as word processing, data base management, a message system; if the user selects the message system from the top level menu, then the next level menu is presented with options such as reading, creating, or sending messages; if the user selects message creation, then the next level menu might provide various commands for editing the text of messages. The other options on the top level menu lead to other branches in the menu tree or hierarchy.

Although tree-like structures are typically used, the organization need not be perfectly tree-like. For example, it may be desirable to have the same option appear on menus in separate branches; this would be like two branches with a common sub-branch.

From GB-A-2 124 459 a pull down menu concept for use with a cursor control device is known. A menu bar, displayed horizontally across the top of a computer display screen, includes a number of title designations corresponding to command functions. The menu bar is itself a menu. A user, manipulating a cursor control device, selects one of the displayed titles and a secondary or sub-command menu is displayed vertically under the title, giving the appearance having been "pulled down." The user then selects the desired sub-command item for execution by the computer. If the menu-tree structure offers a very large number of commands, navigation through the menu system can become time consuming.

In a menu-driven system that offers a very large repertoire of commands, navigation through the menu system can itself become time consuming. For certain situations, backing up is becoming an increasingly undesirable way of getting back to a previous menu. If one frequently switches between two areas of the menu system that are deep in the menu hierarchy, much time may be spent backing up through menus from one area to a high level menu common to the two areas and then proceeding down through menus to the other area. Unnecessary delay results from the time it takes to present to the user each of the menus through which the user wants to back up and the time it takes the user to check to see if the desired menu has been reached.

One way to address this problem is to provide menu by-pass commands. A mechanism is provided by which the user can enter a code or some command text identifying directly the menu to which the user desires to proceed. In by-passing menus in this way, the user is also giving up the benefit menus provide; this form of menu by-pass is a return to command-line operation with the associated limitation that the user must remember the by-pass commands.

Another type of menu navigation aid is a "menu" key. In response to pressing the menu key, the system switches directly to the top level menu. This key enables a user to proceed directly from any lower level menu directly to a predetermined menu.

According to the present invention a mechanism is provided to enable a user to proceed directly to a previous menu by selection from a list of previous menus. Mechanisms are provided for maintaining a list of the path of menus through which a user has passed, displaying that list to the user in response to a particular command selection by the user, accepting a selection from the user of one of the menus in the list, and returning the user to the selected menu. The command by which the user activates the menu list display may be arranged to result from selection of a menu pick, pressing a PF key, or typing the text of the command.

The invention is pointed out with particularity in the appended claims. The above and other advantages of the invention may be better understood by referring to the following detailed description in conjunction with the drawing, in which:
Fig. 1 shows the logical arrangement of some of the major features of a menu data base of an illustrative menu management system embodying the present invention;
Fig. 2 shows the overall structure of a menu list used by the illustrative menu management system to record information about previously executed menus;
Fig. 3 shows greater detail of the individual entries in the menu list shown in Fig. 2;
Fig. 4 illustrates the flow of control among components of the menu manager module of the menu management system; and
Fig. 5 illustrates the flow of control among components of the menu return processor that is shown in Fig. 4 as a component of the menu manager.
MENU MANAGEMENT SYSTEM
MENU DATA BASE (Fig. 1)
PF KEY AND USER DATA BASES
MAINTENANCE MODULE
MENU MANAGER
MENU PATH
MENU LIST (Figs. 2 and 3)
MENU MANAGER OPERATION (Figs. 4 and 5)
SOME VARIATIONS

### MENU MANAGEMENT SYSTEM

The present invention is advantageously embodied in a menu management system.

The menu management system includes data bases of information that adapts the system to any particular use. The data bases hold information that defines menus, users, and actions for programmable function keys (PF keys).

The menu management system includes two modules that use these data bases:
**(1)** a maintenance module, which is used to create and update the data bases; and
**(2)** a menu manager, which, based on information in the data bases, presents menus to a user, accepts the user's selections, and directs actions to be taken in response to the selections.

The menu management system is a tool that can be used to interconnect a collection of subsystems. It can provide the mechanism by which a user directs the overall operation, in effect, building a single system from the collection of subsystems. For example, an accounting system may include program modules that update the accounting system's data base, produce reports, back up critical files, etc. A menu management system could provide the mechanism by which the user selects which of these program modules should be executed. In addition, the menu management system could be used by an individual program module to obtain selections from the user (e.g., the report program may use the menu management system to display a menu of all report types from which menu the user selects the reports that the user wishes to produce).

Use of a menu management system to obtain user selections has various advantages. Savings in both programming time and program size may be obtained, because the program to display menus and accept user selections need only be written once and is thereafter shared among various programs. A menu management system helps provide consistency in the user interface --e.g., the keyboard always operates the same way when making menu picks.

The illustrative menu management system includes data bases with information defining:
**(1)** menus (e.g., screen layout, actions for the menu picks),
**(2)** users (e.g., security classes, passwords), and
**(3)** PF keys (e.g., actions).

### MENU DATA BASE

The menu data base contains the information defining the menus to be displayed by the menu manager. A menu management system may include a plurality of menu data bases; each data base is stored in its own file.

When the menu manager is called, a menu data base file is specified by the caller. Optionally, the caller may also direct the menu manager to display to the user a screen allowing the user to specify the menu data base file to be used.

Each menu data base file can include some information that will apply to all menus included in that data base (i.e., applying to the entire data base file). Each menu data base file will include information for each of the menus which are defined in the file. For each menu, the menu data base file will include information defining each of the menu picks. Thus, a typical menu data base file will contain some information common to all menus, a plurality of menu definitions, and as part of each menu definition a plurality of menu pick definitions.

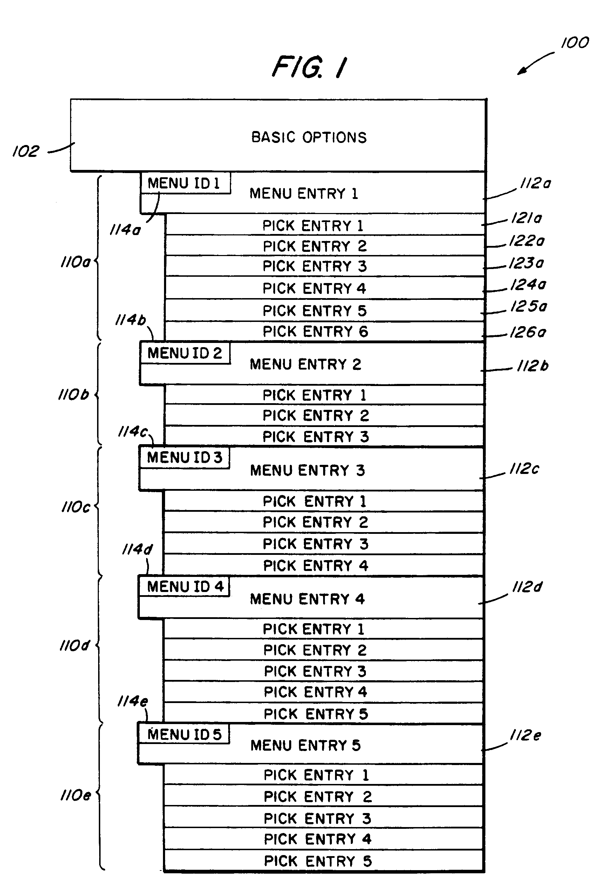

Fig. 1 illustrates the structure of a menu data base 100 containing definitions of five menus. (Typical data bases define far more than five menus; only five are shown in this example so as to keep the figure reasonable in size.)

The information common to all of the menus in the data base is stored in a basic options section 102. The information in the basic options section 102 includes the following:
- window format - defining aspects of the screen display that will not differ from one menu to the next;
- a file-level entry procedure;
- a file-level exit procedure;
- file-level security information;
- identification of a file containing PF key definitions; and
- identification of a file containing user definition information.

Following the basic options section 102 is a series of menu entries 110a, 110b, 110c, 110d, 110e. The information in the data base for each menu includes:
- a menu identifier 114a, 114b, 114c, 114d, 114e (each menu has a name which is unique within the data base and is used as a key for retrieving the record(s) relating to a particular menu);
- a menu title (displayed at the top of the screen when the menu is displayed and used in the below-described display of the menu list);
- menu-level security information;
- identification of a menu entry procedure;
- identification of a menu exit procedure;
- timeout information; and
- a series of menu pick entries (further described below).

All of these items of information except for the pick entries are stored in a main portion 112a, 112b, 112c, 112d, 112e of each of the menu entries 110a, 110b, 110c, 110d, 110e. Following each main portion is a series of pick entries, which will vary in number from menu to menu. For the first menu in the illustrative menu data base there are six menu pick entries 121a, 122a, 123a, 124a, 125a, 126a.

Each menu pick entry includes:
- a pick title to be displayed as part of the menu (this is what the user identifies as the "menu pick");
- pick-level security information; and
- identification of the action associated with the pick (program, menu, internal function, or keyword).

The action taken when the user selects a menu pick can be one of four types:
- program - the program is executed, then the current menu is again displayed for another user selection;
- menu - the menu is added to the menu list and becomes the current menu (i.e., the basis for the next user selection);
- internal menu manager function (e.g., back up one menu or terminate menu manager processing); or
- keyword - the keyword is returned to the calling program (the calling program may choose to call the menu manager again without altering its state, in which case the current menu is displayed again for another user selection).

The menu management system provides for pseudo-pick entries in the menu data base. These cannot be selected by the user; they are not associated with an action. The pseudo-pick entries are used to control the display arrangement of menu picks and to display information on the menu screen in addition to the titles of the menu picks that do have associated actions.

Some of the above-listed information items are optional. When not present, the menu manager uses default values.

The pick-level security information controls which menu picks are actually displayed to any particular user. Each user will only see those menu picks of the security classes to which that user is defined to have access. Thus, a menu may be displayed with different sets of picks for different users.

### PF KEY AND USER DATA BASES

Other data bases used by the menu management system include data bases of users and of PF key definitions.

A data base of users defines logon information for each user and the security classes available to each user. The security classes determine what menu data base files and data base elements the user can modify (using the maintenance module), and what data base files, menus, and menu picks are available to the user through the menu manager.

A PF key data base defines which action, if any, is bound to each PF key. This set of PF key definitions determines what will happen, if anything, when a user presses a PF key.

### MAINTENANCE MODULE

The menu management system includes a maintenance module that is used to create and modify the various data bases used by the menu management system.

### MENU MANAGER

Based on the contents of the menu management system data bases and the selections made by the user, the menu manager provides for movement among menus, execution of programs, and the return to a calling program of keywords. The data bases determine what is possible, and the user determines what actually happens.

The menu manager can be employed in various ways:
**(1)** The menu manager can be called by one program for the purpose of running other programs. For example, an accounting system may have a set of programs used for entering data where each program is used to enter a different type of data; when using the accounting system and desiring to enter data, the accounting system could call the menu manager to control the selection and execution of the various specific data entry programs.
**(2)** The menu manager can be called by a program for the purpose of obtaining a selection from a user. For example, a printing program may be able to print on a variety of different printers. The printing program can use the menu manager to obtain the user's printer selection. This can be accomplished by calling the menu manager and identifying a menu to be presented for which each of the menu picks corresponds to a printer. In particular, the action associated with each menu pick would be a keyword identifying a printer. After accepting the user's selection, the menu manager would return the keyword associated with the selected menu pick to the printer program.
**(3)** The menu manager can be used at the "top level". This is really a special case of using the menu manager as described in **(1)** above. To be used at the top level, the menu manager is called by a simple program whose sole role is to call the menu manager.

Returning keywords and running programs are not separate modes of operation for the menu manager. When the menu manager is called, whether a keyword will be returned or whether further programs will be executed depends upon what actions have been associated with the menu picks and the PF keys in the data bases and what the user actually selects. Selection of one pick on a menu may result in running a program, while selection of a different pick on the same menu may result in the menu manager returning a keyword to the program that called the menu manager.

The menu manager can accept a selection from the user in three ways:
**(1)** menu pick,
**(2)** PF key, or
**(3)** command typed in a command area.

In any particular case not all of these options may be open to the user: the currently displayed menu as defined in the menu data base may not provide a command area; all, some, or none of the PF keys may have actions defined for them; in a very unusual case, a menu may have no menu picks defined.

The overall operation of the menu manager is seen by the user as the following steps:
**(1)** A screen is displayed to the user. The display will typically include a menu title, a command area, and a list of the menu pick titles (optionally also the identifier for the action associated with each pick).
**(2)** The user can move the cursor among the menu picks and can move the cursor to the command area (if one is present) in which the user can type the text comprising a command.
**(3)** The user either presses a key indicating a selection has been made (typically a key labeled RETURN or EXECUTE) or presses a PF key.
**(4)** If the user pressed a PF key, then the action bound to that key is the user's selection; if the cursor is in the command area, then the command the user has typed is the user's selection; if the cursor is in a location on the screen corresponding to a menu pick, then the action defined for that menu pick is the user's selection. If the cursor is not in one of these areas or the PF key pressed does not have a defined action, then an error message is displayed and the above steps are repeated until a selection is successfully identified.

The user's selection, however identified (e.g. by PF key, menu pick, or typed command), is symbolized by an action identifier. The action identifiers are character strings and each explicitly indicates (by the use of special characters such as parentheses) which of the four possible types of action it indicates:
**(1)** program FOO
**(2)** menu (FOO) (characterized by parentheses)
**(3)** internal function 〈FOO〉 (characterized by angle brackets)
**(4)** keyword 'FOO' (characterized by single quotes)

### MENU PATH

As indicated above, one of the types of action that may be taken in response to a user's selection from a menu is the presentation of a second menu. From the second menu the user may, in many cases be able to select a menu pick whose action is a third menu.

It is becoming increasingly common for systems to have networks of very large numbers of menus. A user of such a complex system can spend quite a bit of time navigating through the network of menus. Such networks are often organized in tree-like arrangements: a user will typically proceed down one branch to perform one type of operation, and then back up that branch to where it joins a second branch, and proceed down the second branch to perform a different type of operation.

A user's current "menu path" is the sequence of menus from some initial menu to the current menu. When the user makes a menu selection whose action is the presentation of another menu, the path gets longer. When the user backs up along the path, the path gets shorter.

The menu manager provides four internal functions that can be used to back up (in order of increasing degree of back up):
- 〈EXIT〉: shortens the menu path by one and results in presentation to the user of the immediately previous menu;
- 〈RETURN〉: displays a list of previous menus, the user selects one from the list, the selected menu is displayed, and the menu path is shortened to the selected menu;
- 〈START〉: displays the very first menu in the path and eliminates all other menus from the path; and
- 〈QUIT〉: the menu manager returns to the program that called it with no menu being displayed.

These internal menu manager functions may be bound to PF keys or menu picks, or they may be entered directly as commands.

### MENU LIST

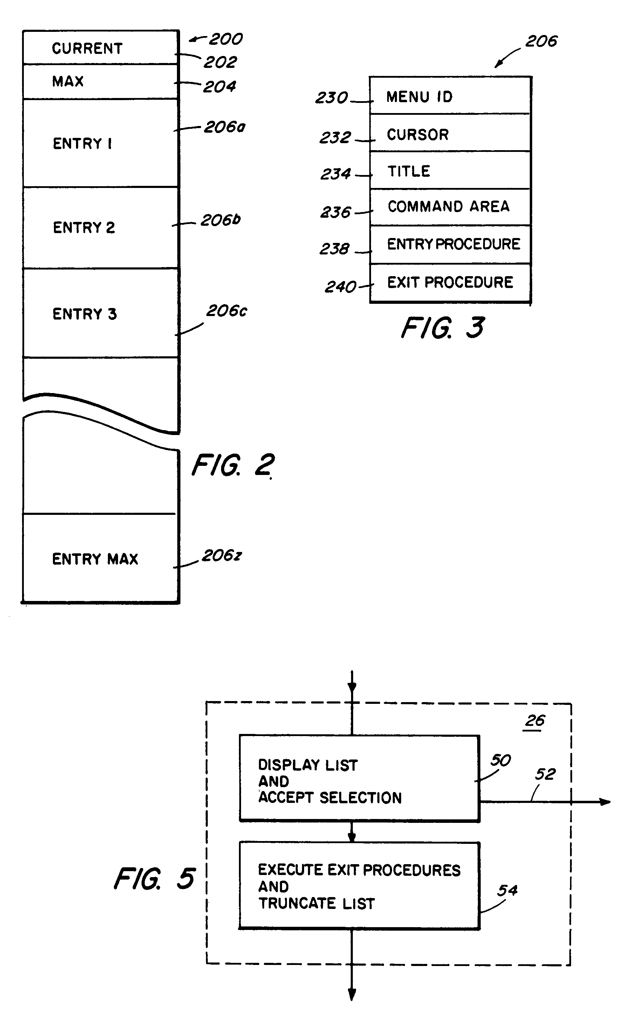

Fig. 2 illustrates the overall structure of a menu list 200, which the menu manager uses to store information about the user's menu path. Heading the list 200 is an element 202 indicating how many menu entries are currently active in the list and an element 204 indicating the maximum number of menus that can be represented in the list 200. Following the two heading elements 202 and 204 is a series of entries 206a through 206z. The list 200 is used as a stack, with the element 202 pointing the "top of the stack", which is the current menu.

Each of the entries 206a - 206z can be used to represent one menu in the menu path. The first menu in the path is represented by the first entry 206a. Succeeding menus (to the extent they exist, which will depend on the current length of the path) are represented by entries 206b, 206c and so forth. If the number of menus in the path is the maximum number that can be represented by the list 200, then the last menu in the path would be represented by entry 206z.

Fig. 3 shows a representative entry 206 which illustrates the structure of each of the entries 206a - 206z in the menu list 200. The entry 206 includes elements 230, 232, 234, 236, 238, and 240.

The element 230 stores the menu identifier of the menu represented by the entry 206. The element 232 stores the location of the cursor on the display the last time the menu represented by the entry 206 was displayed; this makes it possible when the user backs up to that menu to restore the cursor to the same place it was the last time the user was saw that menu. The element 234 stores the title of the menu; this is used in the list displayed to the user in response to the RETURN command (as will be further explained below).

The element 236 is used to store the contents of the command area as it appeared the last time the menu was displayed. As described above, the command area can be filled in by the user in order to select an action that may not be available as a menu pick. The element 236 permits information the user had previously entered in the command area to again be displayed if the user backs up to that menu.

The element 238 is a flag indicating whether the menu's entry procedure has been executed. The element 240 is a flag indicating whether an exit procedure is defined for the menu.

### MENU MANAGER OPERATION

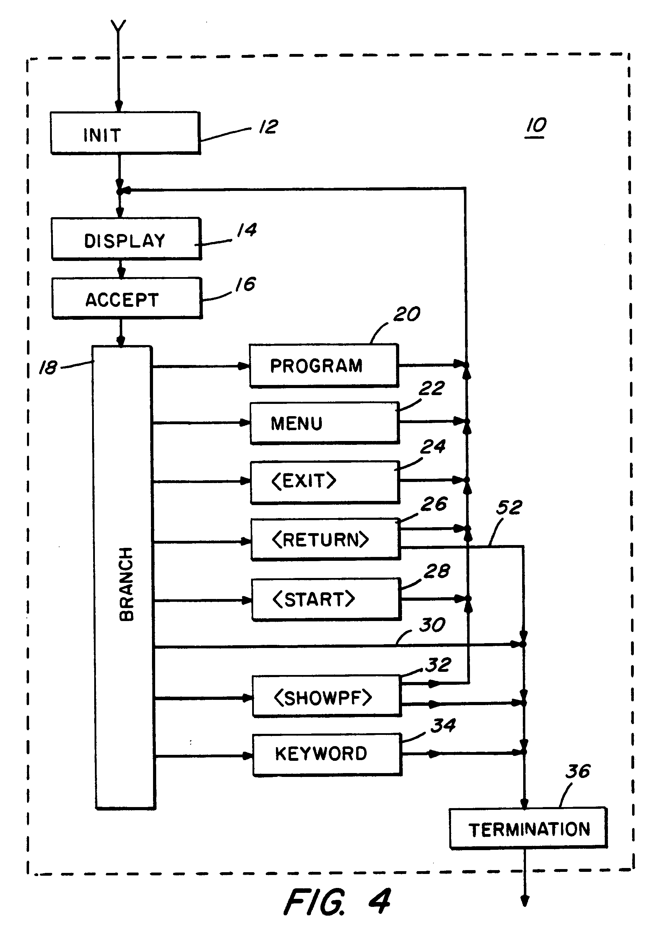

The major components of the illustrative menu manager 10 are shown in Fig. 4.

When the menu manager 10 starts, various initialization operations 12 are performed, including the following. The file-level security information is checked to verify that the user's security classes allow access to that menu data base. If a file-level entry procedure is defined in the menu data base file, then the procedure is performed. The menu list 200 is initialized: the first entry 206a is cleared and its menu identifier element 230 is set to be the menu identifier for the starting menu (as defined by the menu data base or optionally by the program that called the manager); the element 202 of the menu list 200 is set to indicate that the list 200 contains a single active entry.

Then the menu manager 10 begins its main processing loop, which consists of components 14, 16, 18, 20, 22, 24, 26, 28, and 32:
**(1)** the current menu is displayed 14;
**(2)** a user selection is accepted 16;
**(3)** based on the user's selection, a branch is made 18;
**(4)** the branch is to the one of the several components 20, 22, 24, 26, 28, 32, 34 and 36, that is suitable for taking the action that is indicated by the user's selection; and
**(5)** the main processing loop is repeated, beginning with display 14 of the current menu (unless the selected action has resulted in termination of the menu manager processing, which is indicated in Fig. 4 by termination component 36).

The display component 14 uses the menu identifier found in the element 230 of the current entry (determined by the value of element 102) in the menu list 200 as a key into the menu data base 100. From the information thereby located in the menu data base 100, the display of the current menu is built. The pick-level security information is checked, and only those menu picks to which the user is allowed access are displayed.

The component 16 accepts a selection from the user. As described above, the selection may be indicated by pressing a PF key, pointing to a menu pick, or typing a command. However the selection is indicated, it is one of the above-described types of action.

For program-type actions, menu-type actions, and keyword-type actions component 18 directs processing to components 20, 22, and 34, respectively. For internal-function-type actions, processing is directed to a component designed for processing the particular internal function.

When the selected action is a name of a program, branch mechanism 18 causes processing to proceed with the component 20, which calls the named program. When the named program completes its processing, the component 20 causes processing to proceed with the display 14 of the current menu.

When the selected action is a menu identifier, the branch mechanism 18 causes processing to proceed with the component 22. The component 22 refers to the menu data base (in particular to the menu-level security information) to verify that the user has the security permission to access the identified menu. The component 22 then stores the cursor location and the value of the command area in the elements 232 and 236 respectively of the current entry in the menu list 200, increments the element 202 of the menu list 200 (making the entry following the current entry now the current entry), and stores the selected menu identifier in element 230 of the newly current entry in the menu list. If a menu-level entry procedure is defined for the newly current menu, then it is performed. When the entry procedure has been performed, the flag element 238 is set to indicate that the procedure has been performed. If the menu data base indicates that an exit procedure is defined for the newly current menu, then the flag element 240 is set to indicate that an exit procedure is defined; when backing up and performing exit procedures, this avoids the need to refer to the menu data base for those menus for which no exit procedure is defined.

Processing then proceeds with component 14, which displays the newly selected menu.

When the selected action is a keyword, processing is directed to the component 34. The value of the keyword is saved for use by the program that called the menu manager. Processing then proceeds with the termination component 36, which ultimately returns control to the calling program.

Modules 24, 26, 28, 36, and 32 handle the processing of the internal menu manager functions 〈EXIT〉, 〈RETURN〉, 〈START〉, 〈QUIT〉, and 〈SHOWPF〉, respectively. The first four of these functions provide ways that a user can back up along the user's menu path. The fifth function displays to the user the current bindings for the PF keys. Additional internal functions could also be provided; they would be given unique names and their components would be added to the main processing loop in the same fashion as the component 32.

The 〈EXIT〉 component 24 implements the internal function that backs up one menu. The component 24 calls the exit procedure defined for the current menu (if any is defined), decrements the element 202 of the menu list 200 (i.e., popping the "top" menu off the stack), and passes control to the display component 14.

Fig. 5 illustrates the major subcomponents of the component 26 that does the processing to implement the 〈RETURN〉 function. A subcomponent 50 displays a list of menus from which the user selects. Then operations are performed by subcomponent 54 to back up the menu path to the selected menu.

The display of menu titles is prepared by extracting the menu titles from the elements 234 of the menu list 200. Optionally (as determined by the basic options 102 of the menu data base 100), the menu identifiers (stored in the elements 230 of the menu list 200) may displayed along with the menu titles. The menu identifier can be typed in a command area to direct the menu manager to go directly to that menu; displaying the menu identifier helps the user become familiar with the names of the commands.

Selection of one of the listed menus is accepted from the user by the user placing the cursor at the title of the desired menu and pressing the return key. If the list of menus is too long to be displayed on the screen in its entirety, then certain keys are arranged to enable the user to page or scroll through the list, so that all entries in the list are accessible. If, instead of selecting a menu, the user presses the key typically used to terminate programs, then, as is indicated by the line 52, control is passed to the termination component 36.

When the user has selected a menu from the displayed list, the menu path is truncated so that the selected menu is the last menu in the path, and the exit procedures (if any are defined) are executed for each of the menus that are thereby removed from the list 200. For example, if the selected menu is the fourth menu in the menu list 200 which which currently contains six menus, then the truncation is accomplished by setting the element 202 of the menu list 200 to a value of four, and exit procedures are performed for the sixth and then the fifth menus.

The 〈START〉 function returns the user to the first menu in the menu path. To implement this function, the component 28 sets the element 202 of the menu list 200 to a value of one, and performs the exit procedures defined for all menus in the list except for the first.

The 〈QUIT〉 function terminates menu manager processing and returns to the program that called the menu manager. This is accomplished by the termination component 36. The branch corresponding to the 〈QUIT〉 function is indicated in Fig. 4 by a line 30. The termination component performs any exit procedures which are defined for the menus listed in the menu list 200 (from the current menu back through the first menu). If the menu data base file defines a file-level exit procedure, it is performed. Finally, control is passed from the menu manager back to the program which called the menu manager.

### SOME VARIATIONS

Numerous variations on the above-described embodiment are possible. Some exemplary variations follow.

A menu title need not be displayed as part of the menu. The menu title is merely something by which the user can identify a menu. It is useful to display the menu title as part of the menu because this helps the user become familiar with the titles and thus makes it easier for the user to identify the menus when the menu list is displayed.

A menu path is an example of one way of defining a list of menus which adapts to the activities of each user. Alternative ways to define a list of menus which is customized to the activities of the user include: the most recent N menus (irrespective of "forward" or "backward" movement through the menus, and not remembering more than N menus at one time); the menus visited most frequently; the past "major" menus (like above-described path, but eliminating the less important menus).

Display need not be a visual display. For example, in a system with voice response capabilities, menus might be present aurally; this would be particularly useful when the user is interacting through a telephone, which has no visual display.

## Claims

1. A menu manager for use with a system having a plurality of menus to be selected by a user of the system, the menu manager comprising:
database means for storing menu titles associated with said plurality of menus;
means (50) for displaying a list of said menu titles;
selection means (50) by which the user can select one of the displayed titles;
means (54, 14) for displaying, in response to a user selection, the menu corresponding to the selected title,
characterised by:
means (22, 200) for storing a list of menu titles corresponding to the menus which the user has successively displayed in hierarchical order, said list defining the user's menu path;
means (50) for displaying, in response to a user selection, a list of menu titles for at least some of the menus in said stored user's menu path;
selection means (50) by which the user can select one of the displayed menu titles;
means (54) for truncating said user's menu path at the menu corresponding to said selected menu title; and
means (14) for displaying the menu corresponding to said selected menu title.

2. The menu manager of claim 1
characterised by:
means (54) for executing exit procedures for each menu truncated from the menu list.

3. The menu manager of claim 1
characterised by:
means for updating the stored menu path in response to the user's selection of a menu.

4. The menu manager of claim 1
characterised in that:
said truncating of the user's menu path is accomplished by updating the stored menu path to include only the selected menu and those menus previously in the path that precede the selected menu.

5. The menu manager of claim 1
characterised in that:
said selection means includes the keyboard actions of selection of a menu pick, pressing of a program function key or typing the text of a command.

6. The menu manager of claim 1
characterised by:
database means (100) for storing information defining menu-level and pick-level security and information defining user security privileges, and
means (22, 14), responsive to a user selection, for displaying the selected menu from the menu database only if the menu-level security information for that menu and the user security information indicate that the user has the privilege to access the selected menu, and when a menu is displayed, only displaying those menu picks for which the pick-level security information and the user security information indicate that the user has the privilege of access.

## Patentansprüche

1. Menüverwaltungsprogramm zur Verwendung mit einem System mit einer Vielzahl von durch einen Systembenutzer auszuwählenden Menüs, wobei das Menüverwaltungsprogramm umfaßt:
- eine Datenbasis-Einrichtung zum Speichern von der genannten Vielzahl Menüs zugeordneten Menütiteln,
- einer Einrichtung (50) zum Anzeigen einer Liste der genannten Menütitel,
- einer Auswahleinrichtung (50), mit welcher der Benutzer einen der angezeigten Titel auswählen kann,
- einer Einrichtung (54, 14) zum Anzeigen, in Abhängigkeit von einer Benutzerwahl, des dem ausgewählten Titel entsprechenden Menüs,
**gekennzeichnet** durch
- eine Einrichtung (22, 200) zum Speichern einer Liste von Menütiteln, die den Menüs entsprechen, welche der Benutzer nacheinander in hierarchicher Ordnung angezeigt hat, wobei die genannte Liste den Benutzer-Menüpfad definiert,
- eine Einrichtung (50) zum Anzeigen, in Abhängigkeit von einer Benutzerwahl, einer Liste von Menütiteln für wenigstens einige der Menüs in dem genannten gespeicherten Benutzer-Menüpfad,
- eine Auswahleinrichtung (50), mit welcher der Benutzer einen der angezeigten Menütitel auswählen kann,
- eine Einrichtung (54) zum Abschneiden des genannten Benutzer-Menüpfades an dem Menü, das dem genannten ausgewählten Menütitel entspricht, und
- eine Einrichtung (14) zum Anzeigen des dem genannten ausgewählten Menütitel entsprechenden Menüs.

2. Menüverwaltungsprogramm nach Anspruch 1,
**gekennzeichnet** durch
eine Einrichtung (54) zum Ausführen von Ausgangsprozeduren für jedes von der Menüliste abgeschnittene Menü.

3. Menüverwaltungsprogramm nach Anspruch 1,
**gekennzeichnet** durch
eine Einrichtung zum Aktualisieren des gespeicherten Menüpfades in Abhängigkeit von der Menüwahl des Benutzers.

4. Menüverwaltungsprogramm nach Anspruch 1,
dadurch **gekennzeichnet,** daß
das genannte Abschneiden des Benutzer-Menüpfades durch Aktualisieren des gespeicherten Menüpfades in der Weise erreicht wird, daß er nur das ausgewählte Menü und die zuvor im Pfad enthaltenen Menüs, die dem ausgewählten Menü vorausgehen, enthält.

5. Menüverwaltungsprogramm nach Anspruch 1,
dadurch **gekennzeichnet,** daß
die genannte Auswahleinrichtung die Tastaturaktionen bei der Auswahl einer Menüfunktion, das Drücken einer Programmfunktionstaste oder das Eintasten des Textes eines Befehls umfaßt.

6. Menüverwaltungsprogramm nach Anspruch 1,
**gekennzeichnet** durch
- eine Datenbasiseinrichtung (100) zum Speichern von Informationen, welche die Sicherheit der Menüebene und der Menüfunktionsebene definieren, und von Informationen, die Benutzer-Sicherheitsprivilegien definieren, und
- eine von einer Benutzerwahl abhängige Einrichtung (22, 14), die das ausgewählte Menü aus der Menüdatenbasis nur dann anzuzeigen vermag, wenn die Angaben zur Sicherheit der Menüebene für dieses Menü und die Angaben zur Benutzersicherheit angeben, daß der Benutzer zum Zugriff auf das ausgewählte Menü berechtigt ist, und bei der Anzeige eines Menüs nur die Menüfunktionen anzeigt, für welche die Angaben zur Sicherheit der Menüfunktionen und die Angaben zur Benutzersicherheit angeben, daß der Benutzer zugriffsberechtigt ist.

## Revendications

1. Gestionnaire de menus, destiné à être utilisé dans un système disposant d'une multitude de menus à sélectionner par un utilisateur du système, le gestionnaire de menus comportant:
- un moyen de base de données, destiné à mémoriser des titres de menu associés à ladite multitude de menus,
- un moyen (50), destiné à afficher une liste desdits titres de menu,
- un moyen de sélection (50) au moyen duquel l'utilisateur peut sélectionner l'un des titres affichés,
- un moyen (54, 14), destiné à afficher, en réponse à une sélection faite par l'utilisateur, le menu qui correspond au titre sélectionné,
**caractérisé** par
- un moyen (22, 200), destiné à mémoriser une liste des titres de menu correspondant aux menus que l'utilisateur a successivement affichés en ordre hiérarchique, ladite liste définissant la voie d'accès aux menus de l'utilisateur,
- un moyen (50), destiné à afficher, en réponse à une sélection faite par l'utilisateur, une liste de titres de menu pour quelques-uns, au moins, des menus dans ladite voie d'accès aux menus mémorisée de l'utilisateur,
- un moyen de sélection (50) au moyen duquel l'utilisateur peut sélectionner l'un des titres de menu affichés,
- un moyen (54), destiné à tronquer ladite voie d'accès aux menus de l'utilisateur au menu qui correspond audit titre de menu sélectionné, et
- un moyen (14), destiné à afficher le menu qui correspond audit titre de menu sélectionné.

2. Gestionnaire de menus selon la revendication 1,
**caractérisé** par
un moyen (54), destiné à exécuter des procédures de sortie pour chaque menu éliminé par troncature de la liste des menus.

3. Gestionnaire de menus selon la revendication 1,
**caractérisé** par
un moyen, destiné à actualiser la voie d'accès aux menus mémorisée conformément à la sélection d'un menu faite par l'utilisateur.

4. Gestionnaire de menus selon la revendication 1,
**caractérisé** en ce que
ladite troncature de la voie d'accès aux menus de l'utilisateur est réalisée par la mise à jour de la voie d'accès aux menus mémorisée de manière à contenir seulement le menu sélectionné et ceux des menus, antérieurement dans la voie d'accès, qui précèdent le menu sélectionné.

5. Gestionnaire de menus selon la revendication 1,
**caractérisé** en ce que
ledit moyen de sélection comprend les actions, au clavier, de sélection d'une fonction de menu, l'enfoncement d'une touche de fonction de programme ou la frappe du texte d'un ordre.

6. Gestionnaire de menus selon la revendication 1,
**caractérisé** par
- un moyen de base de données (100), destiné à mémoriser des informations définissant la sécurité du niveau de menu et du niveau de la fonction de menu et les informations définissant les privilèges de l'utilisateur en matière de sécurité, et
- un moyen (22, 14), destiné à afficher, en réponse à une sélection faite par l'utilisateur, le menu sélectionné dans la base de données de menus seulement dans le cas où les informations relatives à la sécurité du niveau de menu pour ce menu et les informations relatives à la sécurité de l'utilisateur indiquent que l'utilisateur a le droit d'accéder au menu sélectionné, et, quand un menu est affiché, à afficher seulement les fonctions de menu pour lesquelles les informations relatives à la sécurité du niveau de fonction et les informations relatives à la sécurité de l'utilisateur indiquent que l'utilisateur a le droit d'accès.
